# FASCICULE DE BREVET EUROPEEN

(11) **EP 4 113 214 B1**
(45) Date de publication et mention de la délivrance du brevet: **19.02.2025**
(21) Numéro de dépôt: 21183466.8
(22) Date de dépôt: 02.07.2021
(51) Int. Cl.: G04B 15/14, G04B 13/02

(54) **ROUE D'ÉCHAPPEMENT, OUTIL POUR LA FABRICATION D'UNE ROUE D'ÉCHAPPEMENT ET PROCÉDÉ DE FABRICATION D'UNE ROUE D'ÉCHAPPEMENT**
HEMMUNGSRAD, WERKZEUG FÜR DIE HERSTELLUNG EINES HEMMUNGSRADS UND VERFAHREN ZUR HERSTELLUNG EINES HEMMUNGSRADS
ESCAPE WHEEL, TOOL FOR THE PRODUCTION OF AN ESCAPE WHEEL AND METHOD FOR MANUFACTURING AN ESCAPE WHEEL

(43) Date de publication de la demande: 04.01.2023
(73) Titulaire: Nivarox-FAR S.A., 2400 Le Locle (CH)
(72) Inventeur: BILLOD-LAILLET, Antoine, 25500 Les Fins (FR); HAEFELI, Frédéric, 2720 Tramelan (CH); VERARDO, Marco, 2336 Les Bois (CH)
(74) Mandataire: ICB SA

(56) Documents cités:
- EP-A1- 1 517 198
- EP-A1- 1 596 260
- EP-A1- 3 547 040
- CH-A- 334 710

## Description

### Domaine technique de l'invention

L'invention relève du domaine de l'horlogerie, et notamment des mouvements horlogers mécaniques.

Plus particulièrement, l'invention concerne une roue d'échappement, un outil pour la fabrication d'une roue d'échappement et un procédé de fabrication d'une roue d'échappement.

### Arrière-plan technologique

Une roue d'échappement est bien connue dans le domaine de l'horlogerie et est destinée à être reliée à un ressort moteur qui l'alimente en énergie afin d'entretenir les oscillation d'un balancier par le biais d'une ancre.

Plus particulièrement, la roue d'échappement comporte des dents réparties autour de la périphérie d'une serge reliée à un moyeu par des branches radiales. L'ancre comporte des palettes destinées à coopérer avec les dents de la roue d'échappement.

Cette coopération génère des frottements dont on a cherché depuis des années à minimiser l'intensité afin d'augmenter la durée de vie de la roue d'échappement et la précision de la mesure du temps.

Les solutions les plus courantes sont la génération d'un biseau à l'extrémité de chaque dent de la roue d'échappement afin de réduire la surface de contact entre lesdites dents et les levées. Cette disposition est couplée avec la lubrification de l'extrémité desdites dents. Il existe encore le document EP1596260 qui divulgue une roue d'échappement comprenant encore une réduction de section d'une surface de révolution sur l'extrémité d'une roue par une première opération d'emboutissage, suivi d'une taillage de la denture de la roue d'échappement.

Bien que ces solutions donnent satisfaction, la fabrication de l'échappement pose quelques difficultés. Notamment, le biseau de chaque dent est réalisé de manière individuelle, par un usinage particulier.

En plus d'être relativement lente, cette méthode de fabrication engendre des problèmes de garantie des tolérances serrées exigées par l'application horlogère.

### Résumé de l'invention

L'invention résout les inconvénients précités en proposant une solution permettant d'obtenir facilement et rapidement une roue d'échappement dont le respect des exigences dimensionnelles est garanti.

A cet effet, la présente invention concerne un procédé de fabrication d'une roue d'échappement comprenant des étapes de :
- réalisation d'une ébauche de roue d'échappement destinée à être entraînée en rotation autour d'un axe de rotation, et comprenant un moyeu relié à une serge par des bras radiaux, et des dents régulièrement réparties autour de la périphérie de la serge,
- usinage, de façon simultanée, d'une réduction de section de l'extrémité libre de chaque dent, par un outil de coupe aligné de façon coaxiale avec l'ébauche de roue d'échappement.

On entend par le terme « coaxial » que l'axe de rotation de l'outil de coupe est confondu avec l'axe de rotation de l'ébauche de la roue d'échappement.

Grâce à cette caractéristique, l'enlèvement de matière à l'extrémité libre des dents est réalisé en une unique opération de coupe, ce qui permet d'assurer le respect des exigences dimensionnelles de la roue d'échappement tout en réduisant la complexité et le temps de fabrication de ladite roue d'échappement.

Dans des modes particuliers de mise en oeuvre, l'invention peut comporter en outre l'une ou plusieurs des caractéristiques suivantes, prises isolément ou selon toutes les combinaisons techniquement possibles.

Dans des modes particuliers de mise en oeuvre, la réduction de section est formée par une portion d'extrémité amincie comportant un biseau.

Dans des modes particuliers de mise en oeuvre, la réduction de section usinée comporte une portion d'extrémité amincie de la forme d'une surface de révolution orthogonale à un plan dans lequel est inscrite l'ébauche de roue d'échappement.

Dans des modes particuliers de mise en oeuvre, la réduction de section est formée par une portion d'extrémité amincie comportant une surface plane sensiblement parallèle à un plan dans lequel est inscrite l'ébauche de roue d'échappement.

Dans des modes particuliers de mise en oeuvre, l'étape de réalisation de l'ébauche d'une roue d'échappement est réalisée par méthode LIGA.

Dans des modes particuliers de mise en oeuvre, l'étape d'usinage est réalisée par fraisage.

Dans des modes particuliers de mise en oeuvre, l'étape d'usinage comporte les opérations successives de :
- positionnement de l'outil de coupe de sorte que son axe de rotation soit confondu avec l'axe de rotation de l'ébauche de roue d'échappement ;
- guidage de l'outil de coupe en translation vers l'ébauche de roue d'échappement selon une direction coaxiale avec l'axe de rotation de l'ébauche de roue d'échappement, et découpe d'une partie de l'extrémité de chaque dent de l'ébauche de roue d'échappement de sorte à générer une portion d'extrémité amincie, en une unique opération de coupe ;
- dégagement de l'outil.

Selon un autre aspect, la présente invention concerne également un outil de coupe, par exemple pour la mise en oeuvre d'un procédé de fabrication d'une roue d'échappement tel que décrit précédemment, comportant un corps sensiblement cylindrique destiné à être entraîné en rotation autour d'un axe de rotation et comprenant à l'une de ses extrémités au moins une dent de coupe présentant une arête de coupe s'étendant dans un plan diamétral du corps, ladite arête de coupe présentant une portion adaptée à générer, sur une pièce à usiner, au moins une surface de révolution dont l'axe de révolution est coaxial avec l'axe de rotation de l'outil.

Plus précisément, l'arête de coupe est adaptée à découper une partie d'une extrémité libre de chaque dent d'une ébauche de roue d'échappement, de sorte à générer une portion d'extrémité amincie.

Dans des modes particuliers de réalisation, l'invention peut comporter en outre l'une ou plusieurs des caractéristiques suivantes, prises isolément ou selon toutes les combinaisons techniquement possibles.

Dans des modes particuliers de réalisation, l'arête de coupe comprend une portion dite « portion inclinée » formant un angle obtus ou aigu avec l'axe de rotation de l'outil.

Dans des modes particuliers de réalisation, l'arête de coupe comprend une portion dite « portion rectiligne » parallèle avec l'axe de rotation de l'outil.

Dans des modes particuliers de réalisation, l'arête de coupe comprend une portion dite « portion droite » formant un angle droit avec ledit axe.

Dans des modes particuliers de réalisation, l'arête de coupe présente un profil adapté à générer une structuration fonctionnelle ou décorative de la surface usinée.

Selon encore un autre aspect, la présente invention concerne une roue d'échappement, par exemple obtenue par la mise en oeuvre du procédé de fabrication d'une roue d'échappement tel que décrit précédemment, comportant un moyeu relié à une serge par des bras radiaux et des dents régulièrement réparties sur la périphérie de la serge, chacune des dents comportant une portion d'extrémité amincie reliée à la serge par une portion intermédiaire. La portion d'extrémité amincie de chacune des dents comporte une épaisseur réduite par rapport à l'épaisseur de la portion intermédiaire et comporte une surface de révolution, les surfaces de révolution de chacune des dents partageant un même axe de révolution.

Avantageusement, l'axe de révolution est confondu avec l'axe de rotation de la roue d'échappement.

Dans des modes particuliers de réalisation, l'invention peut comporter en outre l'une ou plusieurs des caractéristiques suivantes, prises isolément ou selon toutes les combinaisons techniquement possibles.

Dans des modes particuliers de réalisation, la portion d'extrémité amincie de chaque dent comporte un biseau, les biseaux étant agencés de telle sorte qu'ils présentent des surfaces curvilignes inclinées matérialisant respectivement des portions d'un même tronc de cône.

Dans des modes particuliers de réalisation, la portion d'extrémité amincie de chaque dent comporte une surface d'extrémité définissant un plan d'impulsion de la dent, ladite surface d'extrémité présentant une forme d'un trapèze rectangle.

Dans des modes particuliers de réalisation, la portion d'extrémité amincie de chaque dent comporte une surface plane sensiblement parallèle à un plan dans lequel est inscrite la roue d'échappement, ladite surface plane étant reliée au biseau.

Dans des modes particuliers de réalisation, la portion d'extrémité amincie de chaque dent comporte une surface de révolution et une surface plane sensiblement parallèle à un plan dans lequel est inscrite la roue d'échappement, les surfaces de révolution étant agencées de telle sorte qu'elles matérialisent respectivement des portions d'un même cylindre de révolution.

Dans des modes particuliers de réalisation, les surfaces de révolution et/ou les surfaces planes des dents peuvent présenter un état de surface produisant un effet lipophobe ou lipophile.

### Brève description des figures

D'autres caractéristiques et avantages de l'invention apparaîtront à la lecture de la description détaillée suivante donnée à titre d'exemple nullement limitatif, en référence aux dessins annexés dans lesquels :
- la figure 1 représente une vue en perspective d'une roue d'échappement selon un exemple de réalisation de l'invention et une vue de détail d'une dent de cette roue d'échappement ;
- la figure 2 représente une vue de détail de la roue d'échappement de la figure 1 ;
- la figure 3 représente une vue de détail d'une dent d'une roue d'échappement selon un autre exemple de réalisation ;
- la figure 4 représente une vue de détail d'une dent d'une roue d'échappement selon encore un autre exemple de réalisation ;
- la figure 5 représente une vue en perspective d'un outil de coupe destiné à la réalisation d'une roue d'échappement selon la présente invention ;
- la figure 6 représente une vue de dessous de l'outil de la figure 5.

### Description détaillée de l'invention

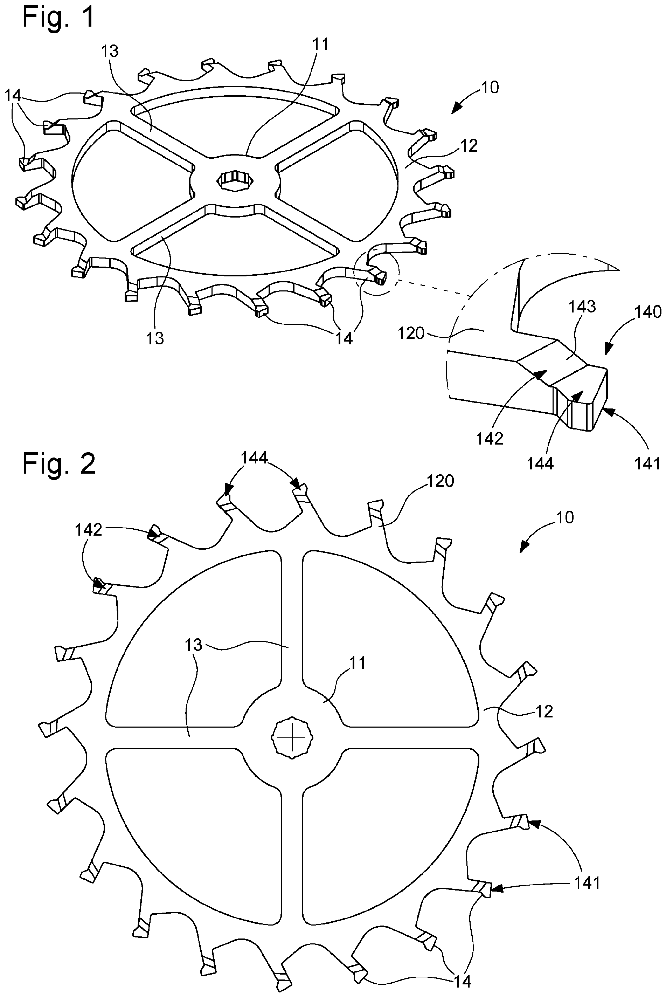

La figure 1 montre une roue d'échappement 10 selon la présente invention, comprenant de façon classique un moyeu 11 relié à une serge 12 par des bras radiaux 13, et des dents 14 répartis régulièrement autour de la périphérie de la serge 12 et s'étendant selon des directions orthoradiales par rapport à un axe de rotation de la roue d'échappement 10.

Dans le présent texte, on définit un plan P (non représenté sur les figures) dans lequel est inscrite la roue d'échappement 10, le plan P étant perpendiculaire à l'axe de rotation de ladite roue d'échappement 10. Par ailleurs, le terme « épaisseur » utilisé dans la suite du texte fait référence à une dimension considérée selon une direction parallèle à l'axe de rotation de la roue d'échappement 10.

Comme représenté sur la vue de détail de la figure 1, chacune des dents 14 comporte une portion d'extrémité amincie 140 reliée à la serge 12 par une portion intermédiaire 120. Avantageusement, la portion d'extrémité amincie 140 de chacune des dents 14 comporte une épaisseur réduite par rapport à l'épaisseur de la portion intermédiaire 120.

Chaque dent 14 comprend une surface d'extrémité 141 à l'extrémité libre de la portion d'extrémité amincie 140, ladite surface d'extrémité 141 définissant un plan d'impulsion de la dent 14. La notion de « plan d'impulsion » est connue de l'homme du métier pour définir une surface destinée à entrer en contact avec une palette d'une ancre afin de lui transmettre des efforts.

En outre, la portion d'extrémité amincie 140 de chacune des dents 14 comporte une surface de révolution 142 agencée de sorte que l'ensemble des surfaces de révolution 142 de chacune des dents 14 partage un même axe de révolution. L'axe de révolution est avantageusement confondu avec l'axe de rotation de la roue d'échappement 10, comme illustré par la figure 2.

En particulier, dans l'exemple de réalisation représenté sur les figures 1 et 2, la surface de révolution 142 de chaque dent 14 forme un biseau 143, les biseaux 143 étant agencés de telle sorte qu'ils présentent des surfaces curvilignes inclinées matérialisant respectivement des portions d'un même tronc de cône, dont l'axe de révolution est confondu avec l'axe de rotation de la roue. Il est évident qu'il est ici fait référence par la mention de tronc de cône à une figure géométrique virtuelle dans laquelle s'inscrivent les surfaces curvilignes inclinées, qui n'a que pour objectif de préciser l'agencement des biseaux 143.

Comme le montre précisément la vue de détail de la figure 1, la portion d'extrémité amincie 140 de chaque dent 14 peut comporter, en plus de la surface de révolution 142, une surface plane 144 sensiblement parallèle au plan P. Plus précisément, la surface plane 144 est reliée d'une part à la surface de révolution 142 par une arête curviligne matérialisant un arc de cercle dont le centre est confondu avec l'axe de rotation de la roue d'échappement 10, et d'autre part, à la surface d'extrémité 141, par une arête perpendiculaire à la direction orthoradiale de la dent 14, opposée à l'arête curviligne.

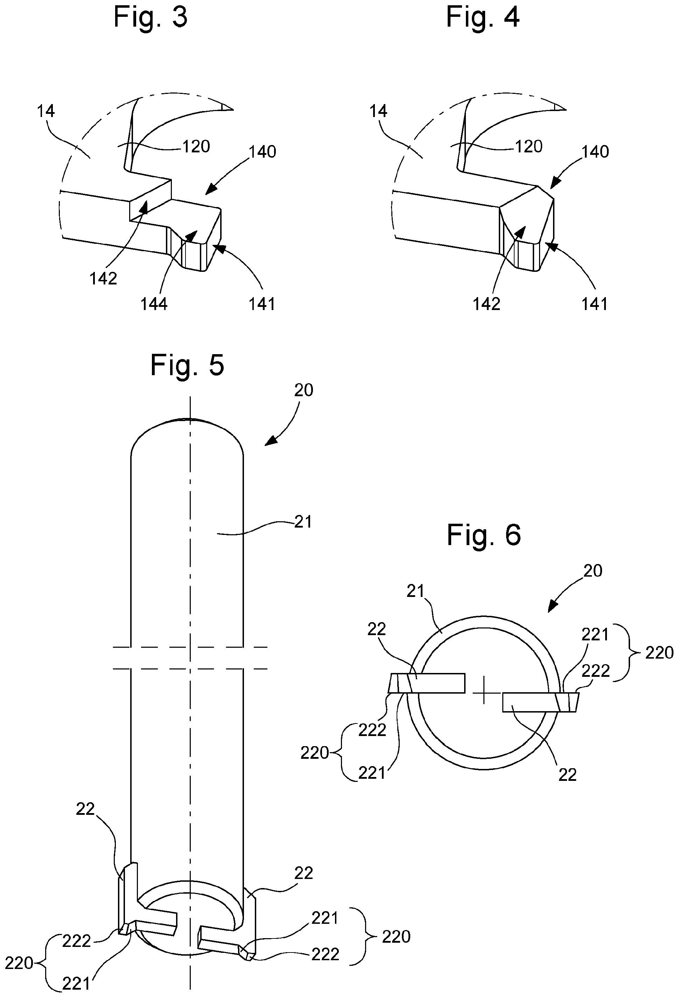

Alternativement aux biseaux 143, dans un exemple de réalisation représenté sur la vue de détail de la figure 3, les surfaces de révolution 142 peuvent être agencées de telle sorte qu'elles matérialisent respectivement des portions d'un même cylindre de révolution dont l'axe de révolution est confondu avec l'axe de rotation de la roue d'échappement 10.

Autrement dit, la surface de révolution 142 est orthogonale au plan P et non inclinée, contrairement à l'exemple de réalisation représenté sur les figures 1 et 2.

Dans encore un autre exemple de réalisation de l'invention représenté sur la figure 4, chaque portion d'extrémité amincie 140 ne comporte qu'une surface de révolution 142 formée par un biseau 143. Lesdites portions d'extrémité amincie 140 ne comportent donc plus de surface plane 144 sensiblement parallèle au plan P.

Les biseaux 143 de l'ensemble des dents 14 présentent des surfaces curvilignes inclinées matérialisant respectivement des portions d'un même tronc de cône dont l'axe de révolution est confondu avec l'axe de rotation de la roue.

La surface curviligne inclinée de chaque biseau 143 est sécante avec la surface d'extrémité 141, de sorte que cette dernière présente une forme d'un trapèze rectangle. On comprend donc ici que l'épaisseur de l'extrémité libre de chaque dent 14 est alors variable.

Avantageusement, les surfaces de révolution 142 et/ou les surfaces planes 144 des dents 14 peuvent présenter un état de surface produisant un effet lipophobe ou lipophile.

Selon un autre aspect, la présente invention concerne un outil de coupe 20 pour l'usinage d'une ébauche de roue d'échappement pour obtenir une roue d'échappement 10 telle que décrite précédemment.

L'outil de coupe 20 est sous la forme d'une fraise destinée à être entraînée en rotation. Comme représenté par la figure 5 dans un exemple de réalisation de l'invention, l'outil de coupe 20 comporte un corps 21 sensiblement cylindrique comprenant une première extrémité par laquelle il est destiné à être fixé à un porte-outil, et une seconde extrémité opposée à la première extrémité. Le corps 21 de l'outil de coupe 20 s'étend selon un axe longitudinal confondu avec son axe de rotation.

Le corps 21 de l'outil de coupe 20 porte à sa seconde extrémité au moins une dent de coupe 22, cette dernière s'étendant au-delà de ladite seconde extrémité.

Dans l'exemple de réalisation représenté sur les figures 5 et 6, l'outil comporte deux dents de coupe 22, dont chacune présente une arête de coupe 220 s'étendant dans un plan diamétral du corps 21 de l'outil de coupe 20.

Précisément, tel que l'illustre en particulier la figure 6, les deux dents de coupe 22 sont diamétralement opposées et sont agencées l'une et l'autre respectivement de part et d'autre d'un plan diamétral du corps 21 de l'outil de coupe 20. Autrement dit, les deux dents de coupe 22 sont identiques et sont agencées l'une par rapport à l'autre selon une symétrie centrale dont l'axe est confondu avec l'axe de rotation de l'outil de coupe 20.

L'arête de coupe 220 de chaque dent de coupe 22 présente une portion adaptée à générer, sur une pièce à usiner, une surface de révolution dont l'axe de révolution est coaxial avec l'axe de rotation de l'outil.

Plus précisément, ladite portion est dite « portion inclinée » 221 et forme un angle obtus ou aigu avec l'axe de rotation de l'outil.

La figure 5, en particulier, illustre des arêtes de coupe 220 dont la portion inclinée 221 est inclinée vers le corps 21 de l'outil de coupe 20. Autrement dit, la distance séparant les portions inclinées 221 des deux arêtes de coupe 220 l'une de l'autre augmente à mesure que les arrêtes s'éloignent de la seconde extrémité du corps 21 de l'outil de coupe 20.

Cette caractéristique permet de pouvoir réaliser, lors d'un usinage, un enlèvement de matière sur les dents 14 d'une ébauche de roue d'échappement 10 un afin de générer une surface de révolution 142 de la forme d'un biseau 143 telle que précédemment décrite et telle qu'illustrée sur les vues de détail de la figure 1 et de la figure 4. Lors de cet enlèvement de matière, le corps 21 de l'outil de coupe 20 est agencé de façon coaxial à l'ébauche de roue d'échappement comme décrit plus en détail ci-après.

Alternativement, l'arête de coupe 220 peut comprendre une portion dite « portion rectiligne » parallèle avec l'axe de rotation de l'outil, non représentée sur les figures. La portion rectiligne est avantageusement adaptée à générer sur chacune des dents 14 de la roue d'échappement, lors de l'usinage, par la rotation de l'outil de coupe 20 autour de son axe de rotation, une surface de révolution 142, l'ensemble des surfaces de révolution 142 étant représentatives d'une portion d'un même cylindre.

L'arête de coupe 220 peut comprendre, en addition avec la portion inclinée 221 ou la portion rectiligne, une portion dite « portion droite » 222 formant un angle droit avec l'axe de rotation de l'outil de coupe 20. La portion droite 222 est avantageusement agencée à l'extrémité de chaque dent de coupe 22, et est davantage éloignée de l'axe de rotation de l'outil que ne l'est la portion inclinée 221 ou la portion droite 222.

Avantageusement, la portion droite 222 permet la réalisation de la surface plane 144 de la portion d'extrémité amincie 140 décrite précédemment.

En outre, la portion inclinée 221 ou la portion rectiligne, et/ou la portion droite 222, peuvent présenter un profil adapté à générer une structuration fonctionnelle ou décorative des surfaces de révolution 142 et/ou sur les surfaces planes 144 des dents 14 de la roue d'échappement 10.

Le profil peut notamment comporter une succession de sommets et de creux.

Les termes « structuration fonctionnelle » font ici référence à un état de surface permettant aux surfaces usinées de présenter un effet lipophobe ou lipophile.

De façon connue en soi de l'homme du métier, les dents de coupe 22 peuvent comporter des angles de dépouille et sont réalisées dans tout matériau approprié, tel que le nitrure de bore cubique polycristallin, le diamant monocristallin ou polycristallin, ou un métal dur, ou un composite à matrice métallique par exemple en carbure de tungstène-cobalt ou en carbure de tungstène-nickel, sur lequel est par exemple déposé un revêtement adapté, tel qu'un revêtement en diamant polycristallin, en « DLC » (pour « Diamond-like carbon »), en nitrure de titane, en carbure de titane, etc.

La présente invention porte également, selon un autre aspect, sur un procédé de fabrication d'une roue d'échappement tel que décrite précédemment.

Ce procédé de fabrication comporte une étape préliminaire de réalisation d'une ébauche de roue d'échappement comprenant une serge 12, un moyeu 11 relié à la serge 12 par des bras radiaux 13 et des dents 14 régulièrement réparties sur la périphérie de la serge 12.

A l'issue de cette étape, l'ébauche de roue d'échappement est conforme à une roue d'échappement conventionnelle, c'est-à-dire à une roue d'échappement de l'état de la technique. Par ailleurs, lors de cette étape préliminaire, il est envisageable d'obtenir une ébauche de roue d'échappement par tout procédé connu de l'homme du métier, par exemple par découpe et taillage.

Toutefois, il est avantageux d'obtenir une ébauche de roue d'échappement par procédé LIGA pour des raisons abordées en détail par la suite.

L'étape suivante consiste en une étape d'usinage, de façon simultanée, d'une réduction de section de l'extrémité libre de chaque dent 14, par un outil de coupe 20 tel que décrit précédemment et aligné de façon coaxiale avec l'ébauche de roue d'échappement, de sorte à obtenir pour chacune des dents 14, une portion d'extrémité amincie 140. Ainsi, à l'issue de la mise en oeuvre du procédé, une roue d'échappement 10 telle que décrite précédemment est obtenue.

On entend ici par les termes « aligné de façon coaxiale », que l'axe de rotation de l'outil et l'axe de rotation de l'ébauche de roue d'échappement sont confondus. Aussi, la réduction de section correspond à une réduction de l'épaisseur des dents 14 de l'ébauche de roue d'échappement.

L'étape d'usinage peut être réalisée de telle sorte que la réduction de section usinée comporte une portion d'extrémité amincie 140 de la forme d'une surface de révolution 142 formant un biseau 143.

Alternativement, l'étape d'usinage peut être réalisée de telle sorte que la réduction de section usinée comporte une portion d'extrémité amincie 140 de la forme d'une surface de révolution 142 orthogonale au plan P.

En addition, l'étape d'usinage peut être réalisée de telle sorte que la réduction de section usinée comporte une portion d'extrémité amincie 140 formée par une surface plane 144 sensiblement parallèle au plan P dans lequel est inscrite la roue d'échappement.

Dans un autre exemple de mise en oeuvre du procédé, l'étape d'usinage peut être réalisée de telle sorte que la réduction de section usinée comporte une portion d'extrémité amincie 140 formée uniquement par un biseau 143.

L'étape d'usinage est avantageusement réalisée par fraisage, et elle comporte les opérations successives de :
- positionnement de l'outil de coupe 20 de sorte que son axe de rotation soit confondu avec l'axe de rotation de l'ébauche de roue d'échappement ;
- guidage de l'outil de coupe 20 en translation vers l'ébauche de roue d'échappement selon une direction coaxiale avec l'axe de rotation de l'ébauche de roue d'échappement, et découpe d'une partie de l'extrémité de chaque dent 14 de l'ébauche de roue d'échappement de sorte à diminuer l'épaisseur de ladite partie, en une unique opération de coupe ; cette opération permet d'obtenir les portions d'extrémités amincies de chaque dent 14 ;
- dégagement de l'outil de coupe 20.

Grâce au positionnement particulier de l'outil de coupe 20 par rapport à l'ébauche de roue d'échappement, les portions d'extrémités amincies obtenues suite à l'opération de découpe, d'une part, sont identiques pour l'ensemble des dents 14 de ladite roue d'échappement, et d'autre part, sont obtenues en une unique opération d'usinage.

Avantageusement, si l'ébauche de roue d'échappement est obtenue par un procédé LIGA, elle est réalisée parmi une pluralité d'autres ébauches de roues d'échappement réparties de façon précise sur un substrat. Ledit substrat comporte des repères optiques agencés précisément par rapport aux ébauches de roues d'échappement et adaptés à être lus par des capteurs optiques de sorte à indiquer la position précise de chacune desdites ébauches à l'outil de coupe 20. Ainsi, en étant réalisé de façon optique, l'opération de positionnement de l'outil de coupe 20 peut être réalisée de façon rapide et précise pour chacune des ébauches de roues d'échappement à usiner.

Par ailleurs, alternativement ou en addition, au cours des opérations de guidage de l'outil de coupe 20 ou de découpe, le procédé peut comporter une opération de vérification optique de la position de l'outil de coupe par rapport à l'ébauche de roue d'échappement à usiner ou usinée, afin de corriger la position de l'outil de coupe 20 si nécessaire.

## Revendications

1. Procédé de fabrication d'une roue d'échappement (10) **caractérisé en ce qu'**il comprend des étapes de :
- réalisation d'une ébauche de roue d'échappement comprenant un moyeu (11) relié à une serge (12) par des bras radiaux (13), et des dents (14) régulièrement réparties autour de la périphérie de la serge (12),
- usinage, de façon simultanée, d'une réduction de section de l'extrémité libre de chaque dent (14), par un outil de coupe (20) aligné de façon coaxiale avec l'ébauche de roue d'échappement.

2. Procédé selon la revendication 1, dans lequel la réduction de section est formée par une portion d'extrémité amincie (140) comportant un biseau (143).

3. Procédé selon la revendication 1, dans lequel la réduction de section usinée comporte une portion d'extrémité amincie (140) de la forme d'une surface de révolution (142) orthogonale à un plan dans lequel est inscrite l'ébauche de roue d'échappement.

4. Procédé selon l'une des revendications 2 ou 3, dans lequel la réduction de section est formée par une portion d'extrémité amincie (140) comportant une surface plane (144) sensiblement parallèle à un plan dans lequel est inscrite l'ébauche de roue d'échappement.

5. Procédé selon l'une des revendications 1 à 4, dans lequel l'étape de réalisation de l'ébauche d'une roue d'échappement est réalisée par méthode LIGA.

6. Procédé selon l'une des revendications 1 à 5, dans lequel l'étape d'usinage est réalisée par fraisage.

7. Procédé selon l'une des revendications 1 à 6, dans lequel l'étape d'usinage comporte les opérations successives de :
- positionnement de l'outil de coupe (20) de sorte que son axe de rotation soit confondu avec l'axe de rotation de l'ébauche de roue d'échappement ;
- guidage de l'outil de coupe (20) en translation vers l'ébauche de roue d'échappement selon une direction coaxiale avec l'axe de rotation de l'ébauche de roue d'échappement, et découpe d'une partie de l'extrémité de chaque dent (14) de l'ébauche de roue d'échappement de sorte à générer une portion d'extrémité amincie (140), en une unique opération de coupe ;
- dégagement de l'outil.

8. Outil de coupe (20) pour la mise en oeuvre d'un procédé de fabrication d'une roue d'échappement (10) selon l'une des revendications 1 à 7, **caractérisé en ce qu'**il comporte un corps (21) sensiblement cylindrique destiné à être entraîné en rotation et comprenant à l'une de ses extrémités au moins une dent de coupe (22) présentant une arête de coupe (220) s'étendant dans un plan diamétral du corps (21), ladite arête de coupe (220) présentant une portion adaptée à générer, sur ladite roue d'échappement, au moins une surface de révolution (142) dont l'axe de révolution est coaxial avec l'axe de rotation de l'outil.

9. Outil de coupe (20) selon la revendication 8, dans lequel l'arête de coupe (220) comprend une portion dite « portion inclinée » (221) formant un angle obtus ou aigu avec l'axe de rotation de l'outil.

10. Outil de coupe (20) selon la revendication 8, dans lequel l'arête de coupe (220) comprend une portion dite « portion rectiligne » parallèle avec l'axe de rotation de l'outil.

11. Outil de coupe (20) selon l'une des revendications 9 ou 10, dans lequel l'arête de coupe (220) comprend une portion dite « portion droite » (222) formant un angle droit avec ledit axe.

12. Outil de coupe (20) selon l'une des revendications 8 à 11, dans lequel l'arête de coupe (220) présente un profil adapté à générer une structuration fonctionnelle ou décorative de la surface usinée.

## Patentansprüche

1. Verfahren zum Herstellen eines Hemmungsrads (10), **dadurch gekennzeichnet, dass** es die folgenden Schritte umfasst:
- Erstellen eines Rohwerks des Hemmungsrads, das eine Nabe (11), die über radiale Arme (13) mit einem Fußkreis (12) verbunden ist, und Zähne (14) umfasst, die regelmäßig um den Umfang des Fußkreises (12) verteilt sind,
- gleichzeitiges Bearbeiten einer Verringerung des Querschnitts des freien Endes jedes Zahns (14) durch ein Schneidwerkzeug (20), das koaxial zum Rohwerk des Hemmungsrads ausgerichtet ist.

2. Verfahren nach Anspruch 1, wobei die Verringerung des Querschnitts durch einen dünner gemachten Endabschnitt (140) gebildet wird, der eine Abschrägung (143) aufweist.

3. Verfahren nach Anspruch 1, wobei die Verringerung des bearbeiteten Querschnitts einen dünner gemachten Endabschnitt (140) mit der Form einer Rotationsfläche (142) aufweist, die orthogonal zu einer Ebene ist, in der das Rohwerk des Hemmungsrads verankert ist.

4. Verfahren nach einem der Ansprüche 2 oder 3, wobei die Verringerung des Querschnitts durch einen dünner gemachten Endabschnitt (140) gebildet wird, der eine flache Oberfläche (144) aufweist, die im Wesentlichen parallel zu einer Ebene ist, in der das Rohwerk des Hemmungsrads verankert ist.

5. Verfahren nach einem der Ansprüche 1 bis 4, wobei der Erstellungsschritt des Rohwerks eines Hemmungsrads durch ein LIGA-Verfahren erfolgt.

6. Verfahren nach einem der Ansprüche 1 bis 5, wobei der Bearbeitungsschritt durch Fräsen erfolgt.

7. Verfahren nach einem der Ansprüche 1 bis 6, wobei der Bearbeitungsschritt die folgenden aufeinanderfolgenden Vorgänge umfasst:
- Positionieren des Schneidwerkzeugs (20), derart, dass seine Drehachse mit der Drehachse des Rohwerks des Hemmungsrads übereinstimmt;
- Führen des Schneidwerkzeugs (20) in Translationsrichtung in Richtung des Rohwerks des Hemmungsrads in einer Richtung, die koaxial zur Drehachse des Rohwerks des Hemmungsrads ist, und Ausschneiden eines Teils des Endes jedes Zahns (14) des Rohwerks des Hemmungsrads, um einen dünner gemachten Endabschnitt (140) in einem einzigen Schneidvorgang zu erzeugen;
- Entfernen des Werkzeugs.

8. Schneidwerkzeug (20) zum Durchführen eines Verfahrens zum Herstellen eines Hemmungsrads (10) nach einem der Ansprüche 1 bis 7, **dadurch gekennzeichnet, dass** es einen im Wesentlichen zylindrischen Körper (21) aufweist, der dazu bestimmt ist, drehangetrieben zu werden, und der an einem seiner Enden mindestens einen Schneidzahn (22) umfasst, der eine Schneidkante (220) aufweist, die sich in einer diametralen Ebene des Körpers (21) erstreckt, wobei die Schneidkante (220) einen Abschnitt aufweist, der dazu ausgelegt ist, auf dem Hemmungsrad mindestens eine Rotationsfläche (142) zu erzeugen, deren Rotationsachse koaxial zur Rotationsachse des Werkzeugs ist.

9. Schneidwerkzeug (20) nach Anspruch 8, wobei die Schneidkante (220) einen Abschnitt umfasst, der als "geneigter Abschnitt" (221) bezeichnet wird und einen stumpfen oder spitzen Winkel mit der Drehachse des Werkzeugs bildet.

10. Schneidwerkzeug (20) nach Anspruch 8, wobei die Schneidkante (220) einen Abschnitt umfasst, der als "geradliniger Abschnitt" bezeichnet wird und parallel zur Drehachse des Werkzeugs verläuft.

11. Schneidwerkzeug (20) nach einem der Ansprüche 9 oder 10, wobei die Schneidkante (220) einen Abschnitt umfasst, der als "rechter Abschnitt" (222) bezeichnet wird und mit der Achse einen rechten Winkel bildet.

12. Schneidwerkzeug (20) nach einem der Ansprüche 8 bis 11, wobei die Schneidkante (220) ein Profil aufweist, das dazu ausgelegt ist, eine funktionelle oder dekorative Strukturierung der bearbeiteten Oberfläche zu erzeugen.

## Claims

1. Method for manufacturing an escapement wheel (10) **characterised in that** it comprises steps of:
- creating an escapement wheel ébauche comprising a hub (11) connected to a felloe (12) by radial arms (13), and teeth (14) regularly distributed around the periphery of the felloe (12),
- simultaneous machining of a reduction of cross-section of the free end of each tooth (14), by a cutting tool (20) aligned coaxially with the escapement wheel ébauche.

2. Method according to claim 1, wherein the reduction of cross-section is formed by a reduced end portion (140) including a bevel (143).

3. Method according to claim 1, wherein the reduction of cross-section machined includes a reduced end portion (140) having the shape of a surface of revolution (142) orthogonal to a plane in which the escapement wheel ébauche is inscribed.

4. Method according to one of claims 2 or 3, wherein the reduction of cross-section is formed by a reduced end portion (140) including a flat surface (144) substantially parallel to a plane in which the escapement wheel ébauche is inscribed.

5. Method according to one of claims 1 to 4, wherein the step of creating the ébauche of an escapement wheel is carried out by a LIGA method.

6. Method according to one of claims 1 to 5, wherein the machining step is carried out by milling.

7. Method according to one of claims 1 to 6, wherein the machining step includes the successive operations of:
- positioning the cutting tool (20) so that its axis of rotation is the same as the axis of rotation of the escapement wheel ébauche;
- guiding the cutting tool (20) in translation towards the escapement wheel ébauche according to a direction coaxial to the axis of rotation of the escapement wheel ébauche, and blanking a part of the end of each tooth (14) of the escapement wheel ébauche so as to generate a reduced end portion (140), in a single cutting operation;
- removing the tool.

8. Cutting tool (20) for the implementation of a method for manufacturing an escapement wheel (10) according to one of claims 1 to 7, **characterised in that** it includes a substantially cylindrical body (21) intended to be driven in rotation and comprising at one of its ends at least one cutting tooth (22) having a cutting edge (220) extending in a diametral plane of the body (21), said cutting edge (220) having a portion adapted to generate, on said escapement wheel, at least one surface of revolution (142), the axis of revolution of which is coaxial to the axis of rotation of the tool.

9. Cutting tool (20) according to claim 8, wherein the cutting edge (220) comprises a portion called "inclined portion" (221) forming an obtuse or acute angle with the axis of rotation of the tool.

10. Cutting tool (20) according to claim 8, wherein the cutting edge (220) comprises a portion called "rectilinear portion" parallel to the axis of rotation of the tool.

11. Cutting tool (20) according to one of claims 9 or 10, wherein the cutting edge (220) comprises a portion called "right portion" (222) forming a right angle with said axis.

12. Cutting tool (20) according to one of claims 8 to 11, wherein the cutting edge (220) has a profile adapted to generate a functional or decorative structuring of the machined surface.
